# EUROPEAN PATENT APPLICATION

(11) **EP 3 160 156 A1**
(43) Date of publication of application: **26.04.2017**
(21) Application number: 15190720.1
(22) Date of filing: 21.10.2015
(51) Int. Cl.: H04N 21/6547, H04N 21/431, H04N 21/658

(54) **SYSTEM, DEVICE AND METHOD TO ENHANCE AUDIO-VIDEO CONTENT USING APPLICATION IMAGES**

(71) Applicant: Nagravision S.A., 1033 Cheseaux-sur-Lausanne (CH)
(72) Inventor: STRANSKY-HEILKRON, Philippe, 1033 Cheseaux-sur-Lausanne (CH)
(74) Representative: Leman Consulting S.A.

(57) **Abstract**

A system for enhancing a main audio-video content (11) using at least one application image (21). This system comprises a content source (10, 10') for providing the main audio-video content (11), an application server (20) located outside an end-user area (3) and suitable for running at least one application (27) and for providing the application image therefrom, a combiner (30) located inside the end-user area (3) for forming a single program transport stream (31) from the main audio-video content and the application image, and a requesting unit (50, 50') for generating and transmitting, to the application server, a request (51) identifying the application. This request further comprises specifications to be taken into account for rendering the single program transport stream. The application server is configured to provide the application image with implementation data (22) defining how to form the single program transport stream so as to comply with said specifications.

## Description

### BACKGROUND

To enhance the user experience around audio-video content, it is common to merge such content with digital images, video frames, widget data, digital written information or any other data that can be displayed on a display screen. These complementary displayable data typically stem from one or several applications, such as widgets (software component), applications software or web applications, and aim to provide attractive additional functions. Such functions intend to enrich the main audio-video content and/or to modify its presentation by laying out, within a single audio-video stream, several video frames from different video streams. Such a layout can take place through different display areas with or without overlap, resizing or change with respect to the transparency of the images.

The rendering device though which the audio-video content is provided can be of any kind. For example, it can refer to a television, a smart phone, a personal tablet computer, a monitor of a personal computer, a laptop, a personal digital assistant or a portable media player suitable for the content's presentation.

Applications are used to provide a large variety of information through a display screen. Accordingly, the content provided by these applications will be referred as "application image(s)" in the present description. Such applications may refer for example to an Electronic Program Guide, a platform giving access to video on-demand or to Internet web pages, video calling, personal video monitoring, instant messaging or still images (e.g. images captured by weather webcams).

To properly reproduce these functions on a wide variety of rendering devices, it is often necessary to modify or to adapt the presentation of the main audio-video content and/or the application images generated by the applications. Indeed, without such an adaptation, the final single audio-video stream is often not fully adapted to a specific rendering device since all rendering devices (in particular display screens) do not have the same characteristics, for example, screen size, resolution, input data rate, or processing performance.

There are several known ways to obtain the final single audio-video stream resulting from a combination of a main audio-video stream and at least one application image. For instance, this single audio-video stream can be provided by a server, e.g. located in a cloud, by combining the main audio-video content and the application image(s) issued from an application. In this case, the audio-video content typically comes from a content provider, such as a head-end, whereas the application runs on an application server located anywhere in the cloud. A drawback of such a solution is that there is no possibility for the end-user to provide audio-video content from another source, such as a personal video recorder or any other source different from the aforementioned content provider, without redirecting this audio-video content to the server in the cloud in view to obtain this single audio-video stream. According to the National Institute of Standards and Technology, Cloud computing is defined as «a model for enabling ubiquitous, convenient, on-demand network access to a shared pool of configurable computing resources (e.g., networks, servers, storage, applications, and services) that can be rapidly provisioned and released with minimal management effort or service provider interaction».

According to another way, it is known to use a set-top-box or an integrated receiver decoder so as to form the single audio-video stream. In this case, the main audio-video content could be a program stream, e.g. a TV program received by this set-top-box via broadcast channel or via any other means, whereas the application image(s) could be provided by an application running on this set-top-box. However, a common issue of such a solution is that applications installed at the end-user side remain difficult to keep up-to-date, because they must be updated on each set-top-box of each end-user. The same problem remains if the functions of the set-top-box are integrated into the rendering device.

A third way implicates smart TVs connected to the Internet. In this scenario, the combination of audio-video content with HTML-coded web pages or widget data issued from a remote server is performed either by the set-top-box or by the rendering device. The issue of this embodiment lies in the fact that, before to perform such a combination, the set-top-box or the rendering device needs to build an image by means of an HTML interpreter, a widget or an engine suitable to execute functions such as "display the text", "apply this character set", "draw a rectangle", "use this color", etc. However, the engine, the widget or the HTML interpreter remains comparable to application software which is relatively complex and which must be installed at the end user side. Therefore, such an HTML interpreter, widget or engine suitable to build an image involves the same drawbacks as those mentioned before.

It should be kept in mind that, without a dedicated application which is suitable to generate application images, i.e. video frames that are ready to be displayed, the rendering devices are unable to process application data such as raw data, widget data or HTML web pages in order to make (i.e. to build or to generate) displayable application images.

Therefore, there is a need to suggest means able to overcome at least some of the aforementioned drawbacks.

### SUMMARY

As the rendering devices which are devoid of specific applications are unable to process widget data or HTML web pages, it is suggested to supply these rendering devices with images (or video frames) which are ready to be displayed. Accordingly, no HTML interpreter, application software, widget or similar engine is required at the end user side to build the base images which will be combined with the images of the main audio video content in order to obtain in the end the single audio-video content. Because application images and video frames of the main audio-video content are images of the same kind, these rendering devices are able to form a new video frame through very simple operations. Such operations manipulate images (or video frames), in order to compose a single stream which is ready to be played. Typically, they involve image resizing, image positioning and/or modifications of the transparency of theses images for overlay purposes. In a particularly convenient manner, it should be noted that these operations imply the general presentation of the images and, therefore, concern neither the content of the images nor their design.

To this end, it is suggested to consider the audio-video content and the application image(s) in a distinct manner, and to form a single audio-video stream therefrom. This single audio-video stream is formed using implementation data, within the end-user area. These implementation data are provided by the application server and define how to combine the audio-video content and the application image(s), so as to comply with specifications. These specifications must be taken into account for correctly rendering both said audio-video content and said application image(s) on a specific rendering device.

In the present context, the combination of the application image(s) with a main audio-video content aims to form a single audio-video stream which can be regarded as an assembly of images (i.e. of displayable frames). Therefore, this assembly does not result from a combination of geometrical primitives such as lines, curves, shapes or polygons typically used to make a vector graphics or an object-oriented graphics, but it results from a combination of images (i.e. final images) which each could be displayable in a separate manner.

According to a first aspect, the present solution relates to a system for enhancing main audio-video content by using at least one application image. This system comprises:
a content source for providing the aforementioned main audio-video content,
an application server located outside an end-user area and configured for running at least one application and providing the application image therefrom,
a combiner, located inside the end-user area, for receiving on the one hand the main audio-video content and on the other hand the application image before forming a single audio-video stream therefrom, and
a requesting unit for generating and transmitting to the application server a request identifying at least the application from which the application image is issued.

In accordance with the suggested solution, the request further comprises specifications to be taken into account for rendering the single audio-video stream. Moreover, the application server is configured to provide the application image with implementation data defining how to form the single audio-video stream so as to comply with these specifications.

As the application, from which the application image(s) is/are issued, is installed within the application server, any update of this application can be made once for all rendering devices connectable to the application server.

Furthermore, since the main audio-video content and the application image(s) remain distinct from each other until they are combined together at the end-user, such a main audio-video content can be supplied not only from a remote content provider, but also from a local content source within the end-user area.

Moreover, as the single audio-video stream is formed to comply with specifications that must be taken into account for its playback and as these specifications are provided from the end-user area, the single audio-video stream will be fully adapted to a specific rendering device of the end-user.

Other embodiments will be presented in the following detailed description.

### BRIEF DESCRIPTION OF THE DRAWINGS

The following detailed description will be better understood with reference to the attached figures in which:
Figure 1 schematically depicts an overview of the system suggested by the present solution.
Figure 2 shows, as way of examples, the content carried by the request generated by the requesting unit and the content of implementation data generated by the application server.
Figure 3 is a more detailed illustration of a device acting as a combiner, according to one embodiment.

### DETAILED DESCRIPTION

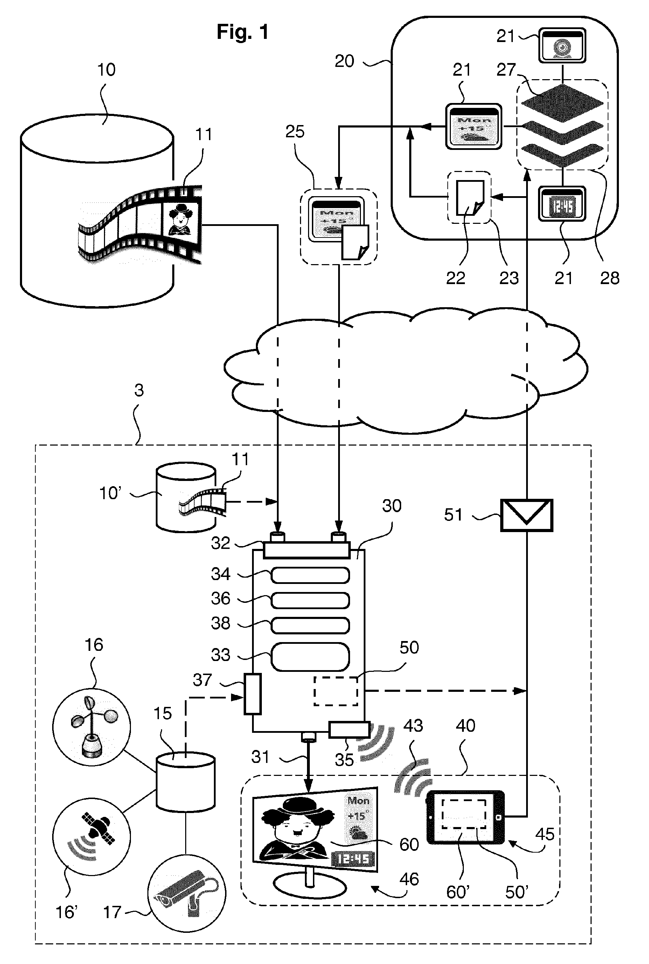

Fig. 1 schematically shows an overview of a system for enhancing a main audio-video content using at least one application image. This system comprises a content source 10, 10', an application server 20, a combiner 30 and a requesting unit 50, 50'. The combiner and the requesting unit 50, 50' are located within an end-user area 3. As shown by the reference numerals 10 and 10', the content source can be respectively located outside or inside the end-user area 3. The application server 20 is located outside the end-user area 3. In a preferred embodiment, the content source 10 and the application server 20 are linked to the end-user area 3 through a communication network (e.g. a computer network or data network), which is depicted by a cloud in Fig. 1. Although the content source 10 and the application server 20 are shown as two separate entities, it should be understood that they could also be part of a same entity. As shown by the reference numerals 50 and 50', the requesting unit (illustrated in dashed line) is preferably located in the combiner 30 or respectively in an end-user device 45. Preferably, the end-user device 45 is a remote or nomad device such as a portable device, for example a tablet computer, a smart phone a laptop or a portable media player.

The content source 10, 10' refers to any device or any entity suitable for providing main audio-video content 11. For example, the content source 10 can be regarded as a content provider, such as a head-end, able to provide any type of audio-video content. Such audio-video content can be provided through any transmission means (e.g. satellite, terrestrial, cable, Internet or mobile network) and by any routing schemes (e.g., broadcast, unicast, multicast, geocast, anycast). On the other hand, regarding the content source 10' which is located inside the end-user area 3, such a source should be regarded as a local source, for example an optical disc-player (e.g., CD, DVD, HD DVD or BD -player), a hard-drive or any other device suitable for playing video and/or audio-video content from any storage means (e.g. memory card, USB flash drive or mass storage, Network Attached Storage, local database or file server).

The audio-video content 11 can refer for example to a television program stream, a movie, a video conference or any audiovisual service or audiovisual production. In the following description, this content 11 is referred as "main audio-video content" in order to distinguish it with application image(s) 21 provided by the application server 20. The application image 21 is an image that is ready to be displayed by any rendering device suitable for displaying video content. Accordingly, an application image can be for example a video frame extracted from a video sequence or it can be a still image, for instance a graphical image such as an EPG image or an image captured by a webcam. This also means that a plurality of application images 21 can refer to a sequence of video frames, for example a video or a portion of a video with or without audio data. In the following description, the expression "application image" will be recited in its singular form. However, it should be understood that this singular form could be definitely substituted by a plural form. Moreover, it should be understood that an application image is not limited to contain video data only. Indeed, an application image could also comprise other data, such as audio data or subtitles for example. Therefore, the application image could be also considered as an audio-video frame or a media frame.

The application server 20 is an entity suitable for hosting and running at least one application 27 and for providing at least one application image 21 therefrom. The application 27 is fully similar to the examples of applications mentioned above in the background section of the present description. As shown by way of example in Fig. 1, three different applications 27 are schematically stacked in an application engine 28. One of these applications 27 provides an application image 21 for displaying weather conditions, another application 27 provides an application image 21 for displaying the time of the day and the third application 27 provides application images 21 captured by a webcam, e.g. during a video call. Off course, the application server 20 is not limited to provide three applications only and could provide all kinds of applications 27. As the applications 27 are typically chosen by the end user in view to customize the single stream displayed on the user's rendering device, the application image 21 are preferably provided under an unicast routing scheme, i.e. via a one-to-one relationship between the application server 20 and the end user area 3.

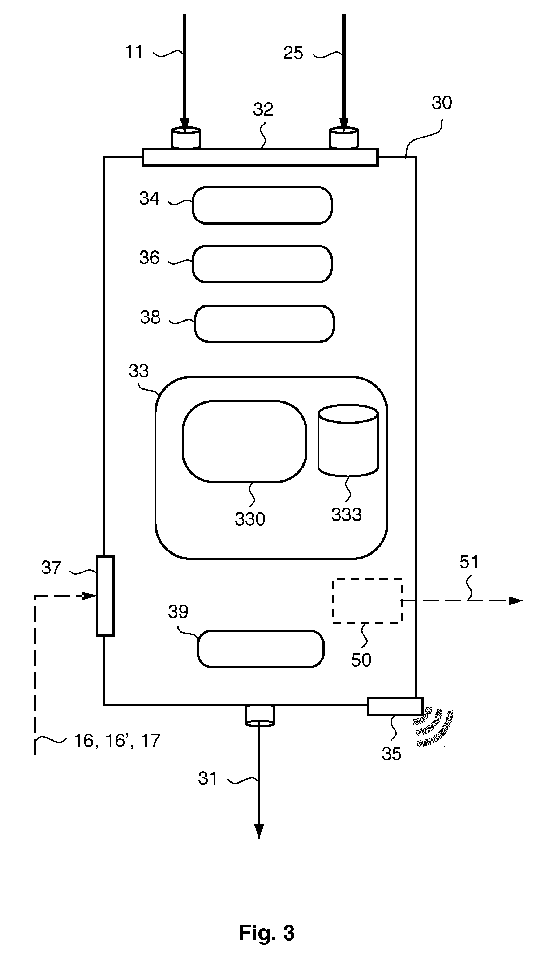

The combiner 30 could be an independent device, such as a set-top-box (hardware), or a logical element (software) that could be lodged or implemented into another device, for example into the end-user device 45. According to the preferred embodiment, the combiner 30 is configured to receive through at least one interface 32, on the one hand the main audio-video content 11, and on the other hand the application image 21 with implementation data 22 before to form a single final stream therefrom. This single final stream is referred hereafter as a single program transport stream (SPTS) 31 because it may include more than one stream. By contrast with a transport stream comprising more than one program (such as a multi program transport stream), the SPTS is an audio-video transport stream which relates to only one single program, namely to a single audio-video event or a single audio-video content (movie, TV program, etc). It should be understood that the SPTS contains a single video stream, usually together with at least one audio stream and one or more data streams if any. Multiple audio streams are used to provide multilingual versions of the media, whereas data streams may contain various kinds of data, for example subtitles (captions), chapter-information, metadata (tags) or any other data. The SPTS 31 should not be confused with a complex stream. By contrast with complex signal such as a multiplexed stream, the SPTS 31 should be regarded as a simple stream, namely a final audio-video program stream which is ready to be played by a rendering device 46. More detailed explanations regarding the manner to obtain the SPTS 31 will be provided later in reference to Fig. 3.

The main audio-video content 11 and the application image 21 remain distinct from each other when they are transmitted or received by the combiner 30. Accordingly, the main audio-video content 11 and the application image 21 can be transmitted separately, for instance through a single transmission channel or through two distinct channels. They could be also transmitted under a multiplexed form, e.g. through a transport stream. It should indeed be noted that multiplexed data remain distinct from each other, typically thanks to identifiers contained in data packet headers. This distinction is retained even if the data packets, which belong to different streams, are mixed together.

The interface 32 of the combiner 30 can be a receiving device (hardware) which allows receiving or exchanging data, in particular audio-video content streams and application images, with other devices such as content sources 10, 10' and application servers 20. In the case where the combiner 30 is a logical element instead of hardware, the interface 32 could be also just software, namely a logical interface made of a series of instructions. Audio-video content, application images and other data can be received by the interface 32 via any transmission means (e.g. satellite, terrestrial, cable, Internet or mobile network).

The SPTS 31 can be played either directly at the output of the combiner or at a later time after being stored in a storage device such as a personal video recorder or any other device for storing audio-video streams. The SPTS 31 could be also stored in the combiner itself and retrieved later in order to be played by the rendering device 46. This rendering device 46 can be of any type, as already mentioned in the background section of the present description. Accordingly, the end-user device 45 may be also used as rendering device 46 for playing the SPTS 31, since both devices 45 and 46 can comprise a display screen 60', respectively 60, appropriate for this purpose. Accordingly and as illustrated in Fig. 1, the rendering device 46 and the end-user device 45 are schematically brought together in a generic apparatus 40 suitable for reproducing images (video frames) from the SPTS 31.

The requesting unit 50, 50' is configured for generating a request 51 and for transmitting this request to the application server 20. The transmission of this request can be performed either directly or via an intermediate device located inside or outside the end-user area 3. Such an intermediate device could be also located at the interface of the end-user area. Moreover, depending on the location of the requesting unit 50, 50' and in particular if it is located within the end-user device 45 (as shown in Fig. 1 by the reference numeral 50'), the request 51 could also transit via the combiner 30 instead of being sent directly to the application server 20 by the end-user device 45.

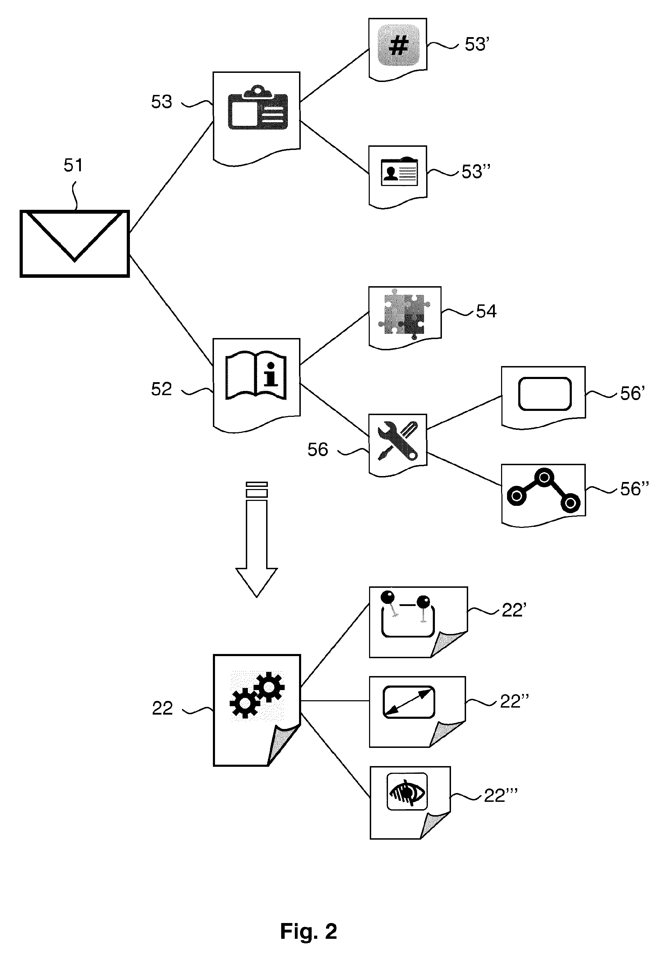

A main purpose of the request 51 is to activate one or more applications 27 within the application server 20, so that the combiner 30 can receive at least one application image 21 from each of these applications 27. If an application 27 has been already activated by a previous request 51, this request could also be used to deactivate this application 27. To this end, the request may comprise a command to trigger the activation or deactivation of the respective application. However and according the preferred embodiment, the request 51 rather comprises an identifier 53 (Fig. 2), in particular at least one identifier acting as a command. Still preferably, the request 51 comprises at least an application identifier 53' to identify a specific application among all applications 27 that the application server 20 is able to provide.

In one embodiment, the request 51 could also comprise a user identifier 53" in order to provide information about the user account with which this request must be associated. However, such a user identifier 53" could be optional, for example if a dedicated channel has been already opened during a session, to tunnel data exchanged between the end-user and the application server 20. Such a dedicated channel could be a private secure channel and/or an authenticated channel. For example, data exchanges between the end-user area 3 and the application server 20 could be achieved through a Virtual Private Network, namely a private network across a public network such as the Internet.

On the other hand and as shown in Fig. 2, the request 51 also comprises specifications 52 to be taken into account for rendering the SPTS 31, more specifically for properly rendering this SPTS in accordance with a particular rendering device and/or in accordance with end-user's presentation preferences. To this end, these specifications can be regarded as a set of requirements to be met or as a set of parameters to be taken into account to optimize or at least to enhance the rendering of the SPTS 31 on a specific rendering device 46, 45. The optimization or the improvement of the rendering of this SPTS 31 may depend on choices or preferences of the end-user, such as a particular presentation desired by the end-user. It may also depend on technical parameters, or both on a particular presentation and technical parameters. Accordingly, the specifications 52 may comprise presentation data 54 and/or technical data 56, as shown in Fig. 2.

The presentation data 54 define how to present the application image 21 and/or the main audio-video stream 11 on the display screen 60, 60' when rendering the SPTS 31. For example, the presentation data 54 can refer to a specific layout of the application image 21 and/or the main audio-video stream 11 on the display screen. Typically, this layout can be defined by an end-user choice or by end-user preferences.

The technical data 56 may relate, for example, to the display screen 60, 60', to the device 45, 46 and/or to the data link(s) used to provide the main audio-video content 11 and/or the application image 21. As shown in Fig. 2, technical data which specifically relate to the display screen (or to the respective device) have been identified by the reference numeral 56'. Technical data relating specifically to the communication link have been identified by the reference numeral 56". The communication link can be a wired or wireless data link connecting the display screen 60, 60', or the respective device 46, 45, to the content source 10, 10' and/or to the application server 20.

In one embodiment, the technical data could refer at least to the less efficient portion of such a connection. More specifically, the technical data may refer for example to the size and/or the resolution of the display screen 60, 60', to the image-refresh rate provided by this screen, to the performances of the processor which controls this screen, or to the maximum data rate (or the current data rate) of the link through which this display screen or the related device is supplied.

According to the solution of the present description, the application server 20 is configured to provide the application image 21 (more specifically at least one application image 21) with implementation data 22. The implementation data 22 are directed to the combiner 30 since they define how to form the SPTS 31 in order to comply with the specifications 52. That is, the implementation data 22 define how to combine the application image 21 and the main audio-video content 11 to obtain an SPTS 31 which meets the specifications 52. For example and as shown in Fig. 2 through the first pictograph 22', the implementation data 22 can specify where the application image 21 and/or the main audio-video content 11 must be located within the area defined for example by the size of the screen 60, 60'. Referring to the second pictograph 22", the implementation data 22 could specify the size of the application image 21 and/or the size of the video frames of the main audio-video content 11. Referring to the third pictograph 22"', the implementation data 22 could also specify the transparency rate applicable on the application image 21, in particular in the case where such an image overlaps the video frame of the main audio-video content 11. It should be noted that the implementation data 22 is not limited to these examples and could include one or more of these criteria.

As schematically shown in Fig. 1, at least a part of the request 51 sent to the application server 20 is processed by a processing unit 23 within this application server 20. This processing unit 23 is configured to generate the implementation data 22 on the basis of the specifications 52 carried by this request 51. From the output of the application server 20, the application image 21 and the implementation data 22 are sent to the combiner 30. Preferably, the application server 20 is configured to provide the application image 21 and the implementation data 22 within an application multimedia content 25. Thus, such an application multimedia content 25 can be regarded as a container, or as a data set, comprising application data which relate to at least one application 27 and which could be configured in accordance with particular specifications 52. Still preferably, the implementation data 22 are included within the header of at least one data packet or with the header of a group of data packets which include the application image(s) 21.

In the case where the requesting unit 50' is located within the end-user device 45, the latter may preferably be connected to the combiner 30 through a wireless connection 43 for transmitting the request 51 to the application server 20, via the combiner 30. However, if the combiner 30 is also located within the end-user device 45, the request 51 could be directly transmitted from this device 45 to the application server 20. Such a transmission could be also carried out via a gateway suitable for connecting the end-user area 3 to the cloud hosting the application server 20.

In one embodiment, the end-user device 45 is configured as input device in order to include, in the request 51, at least a part of the specifications 52 and/or identification data 53' of the application 27. For example, the end-user device 45 may be used to enter presentation data 54 that have to be included in the request 51. In one embodiment, the user could lay out, within the area of the display screen 60', the areas reserved for the main audio-video content 11 and for the application image(s) 21, so as to define a specific layout that he/she wants to reproduce on the rendering device 46, 45. Typically, such a layout may depend on the end-user preferences. This layout can be translated, e.g. by the requesting unit 50, 50', into presentation data 54 to be included in the request 51. Accordingly, the same layout will then be reproduced on the rendering device 46, in particular by the combiner 30 when it forms the SPTS 31 in accordance with the implementation data 22. In the same way, the end-user may also specify whether certain areas should overlap and, if any, may specify the transparency rate of the image(s). In addition or instead of presentation data 54, the end-user device 45 may be also used to collect technical data 56 to be included in the request 51. In any case, presentation data 54 and/or technical data 56 may be collected by the end-user device 45, for instance through an appropriate interface. For example, this interface could be a user interface such as a keyboard or a touch screen, or any means suitable to collect some technical data from any other device, e.g. from the combiner 30 and/or from the rendering device 46.

According to another embodiment, the request 51 may further comprise additional data 16, 16' to be included in the application image 21. These additional data can be raw data provided for example from at least one local source 15 to the combiner 30, e.g. through an input interface 37, or to the end-user device 45. More particularly, these additional data are provided to the requesting unit 50, 50'. As an example, Fig. 1 shows that the local source 15 could be supplied with raw data, respectively from a personal weather station and/or a personal GPS tracker. With the rise of the so-called Internet of Things, any object having the ability to deliver data could be connected to the local source 15 for adding easily displayable information. In a further approach, the additional data 16, 16' could be received by a receptor that can be viewed as a local source 15 for the end-user. Such a receiver could be configured to receive these additional data from a sender coupled to the receiver and located outside the end-user area 3. For example, such a sender could be part of a device, offering services such as taxi services or delivery services which might be called by the end-user via the Internet for example. Any information from the sender could be provided in messages through the aforementioned additional data. Accordingly, live messages or geo-tracking data could be displayed on the end-user rendering device, for instance as notifications or sender information.

As these additional data 16, 16' are in principle not video frames, they cannot be readily displayed without a dedicated application 27. For this reason, they are sent to the application server 20 instead of being processed and converted into images by the combiner. In addition, as raw data often refer to small data size, they can easily take place in the request 51 while occupying an insignificant portion of the available bandwidth. Moreover, since this approach does not require the installation of an application at the end-user side, there is no update problem. Once received by the application server 20, such additional data 16, 16' can be easily integrated in a respective application 27 so as to be included in the application image 21.

According to another embodiment, the combiner 30 can be further configured for receiving a secondary video or audio-video stream 17 from the local source 15. Furthermore, it can be also configured for including this secondary video or audio-video stream 17 within the SPTS 31, so as to form the latter, still in accordance with the implementation data 22. As shown in Fig. 1, this secondary stream may be provided for example by a local monitoring camera, by a personal webcam, or by any video or audio-video stream inside the end-user area 3. Given that the secondary video or audio-video stream 17 is made of video frames, there is no need to upload this stream to the application server 20. Accordingly, this stream 17 can be directly combined by the combiner 30 with any other audio-video stream and/or with any application image 21.

The combiner 30 could be also suitable for receiving, in a multiplexed form, both the main audio-video content 11 (from the content source 10) and the application image 21 (with or without the implementation data 22), e.g. within a multiplexed stream. In this case, the combiner 30 would include a demultiplexer 34 to retrieve, from such a multiplexed stream, the audio-video content 11, the application image 21 and, if any, the implementation data 22. Accordingly, the demultiplexer 34 is configured to separate the audio-video content 11, the application image 21, and if any, the implementation data 22, from the multiplexed stream, so that each of these content 11, image 21 or data 22 can then be processed independently of each other.

Moreover, it should be noted that any content, stream, image or data transmitted to the combiner 30 could be encrypted, in particular if the system, the device or the method of the present description is implemented in a pay-TV field or in a field providing similar services. In this case, the combiner 30 would be also provided with a security module or at least a descrambler 36 for decryption purposes, in particular for decrypting the audio-video content 11, the application image 21 and/or the implementation data 22 in the case where at least one of these data 11, 21, 22 is encrypted when they are received by the combiner 30.

In one embodiment, the combiner 30 can be configured to receive the main audio-video content 11 and/or the application image 21 (with or without the implementation data 22) in a compressed form. Such a compression can be respectively achieved by the content source 10 and/or by the application server 20. Nevertheless, the content source 10' located inside the end-user area 3 could be also configured to provide a compressed main audio-video stream 11 to the combiner 30. Accordingly, the combiner 30 can be provided with a decoder 38 (e.g. an MPEG decoder) suitable to decompress compressed data.

Once the stream(s) received by the combiner has/have been demultiplexed and/or decrypted and/or decompressed, the audio-video content 11, the application image 21 and the implementation data 22 are ready to be used by the combiner 30. The combiner can then undertake, e.g. in the combining unit 33, the combination of the application image 21 with the audio-video content 11 in order to form the SPTS 31. This combination, which is described hereafter in more detail together with Fig. 3, is performed in accordance with the implementation data 22, so as to meet the specifications 52 that were included in the request 51.

According to another embodiment, the request 51 could be sent to the application server 20 through a return channel connecting the combiner 30 to said application server 20, either directly or via an intermediate entity such as a content provider for example. Such a return channel is also known as return path or back channel and is commonly used by interactive televisions, providing on-demand delivery content for instance.

The combiner 30 is sufficient to overcome the drawbacks described in the background portion of the present disclosure. This combiner may also be defined as being a device 30 (or combining device 30), located inside an end-user area 3, suitable to enhance the main audio-video content 11 using at least one application images 21.

To this end and as better shown in Fig. 3, this device 30 comprises at least one interface 32, for receiving the main audio-video content 11 and the application image 21. It further comprises a combining unit 33 for combining said main audio-video content 11 and said application image 21, so as to form a SPTS 31. As already shown in Fig. 1, the main audio-video content 11 can be received either from a content source 10 located outside the end-use area 3 or from a content source 10' located inside the end-user area 3. On the other hand, the application image 21 is received from outside the end-user area 3, in particular from the application server 20 which is a remote server.

In addition, the device 30 is configured to receive (e.g. through the interface 32 and in particular via the application multimedia content 25) implementation data 22 defining how to form the SPTS 31, so as to comply with the specifications 52 that have to be taken into account for rendering the SPTS 31.

More specifically, to perform the combination of the main audio-video content 11 and the application image 21, the combining unit 33 proceeds frame by frame in accordance with a combining algorithm. Such an algorithm can be run for example within a processor 330 of the combining unit 33. To this end, the combining unit 33 comprises at least one memory 333 for receiving a current main image from the main audio-video stream 11 and a current application image from the application multimedia content 25. On the other hand, the processor 330 has also access to the implementation data 22 which have been received via the application multimedia content 25 and which may be stored in the memory 333 for example. Thanks to the implementation data 22, the processor 330 knows how to present the images of the main audio-video stream 11 and those of the application 27.

According to one embodiment, the processor 330 performs a specific layout of the current main image, as defined by the implementation data 22, so as to obtain a first updated image. The processor 330 proceeds in a similar way with regard to the current application image so as to obtain a second updated image. Then, the processor 330 merges the two updated images in order to obtain a single final image which will meet the specifications 52 of the related rendering device 46.

By proceeding in this way for all frames (images) of the main audio-video content 11 and those of the application 27, the combining unit 33 is able to obtain a single final video stream where the images from the content source 10, 10' and those from the application server 20 have been merged together while complying with the specification 52 of the end-user rendering device. If any, the device 30 then encapsulates the single final video stream with other streams, for instance with the audio and data streams of the main audio-video content 11 and, if any, with the audio and data streams of the application 27.

The stream encapsulation is an operation allowing to obtain the SPTS 31. This operation can be performed for example by an encapsulation module 39, as schematically illustrated in Fig. 3. Although the encapsulation module 39 is illustrated outside the combining unit 33, this module 39 could be also located inside this combining unit 33. The encapsulation of the streams is performed in the same way as for providing the main audio-video stream 11 from different streams (audio, video, data streams), namely that these streams are synchronized with each other. In addition, the same synchronization as that used in the main audio-video stream 11 can be kept for the SPTS 31, so that there is no need to generate a different synchronization. The stream encapsulation may also be regarded as an operation aiming to place streams into a container, for instance into a video file or into a transport layer acting as video container. It should be noted that the device 30 may be also provided with one or more buffers for buffering any stream which has been input into the device 30 and/or must be output from this device.

According to one embodiment, the device 30 further comprises the requesting unit 50 for generating a request 51 and transmitting this request outside the end-user area 3, especially for its transmission to the application server 20. This request 51 also comprises the specifications 52 and identifies at least one application 27 from which the application image 21 is issued.

Alternatively and as shown in Fig.1, the device 30 may comprise a wireless interface 35 for receiving such a request 51. For example, this request 51 could be received from the end-user device 45, in particular if the latter is provided with a requesting unit 50' for generating such a request 51.

According to another embodiment, the device 30 can comprise an input interface 37 for receiving, from the end-user area 3, additional data 16, 16' and/or a secondary video or audio-video stream 17. These additional data 16, 16' are mainly intended to be included in the application image 21, as already mentioned in connection with the above-described system. On the other hand, the secondary video or audio-video stream is intended to be included into the SPTS 31 by the combining unit 33, in accordance with the implementation data 22. In other words, the combining unit 33 can be configured to combine the application image 21, the main audio-video content 11 and the secondary video or audio-video stream 17 together and in accordance to the implementation data 22, so as to form a SPTS 31 which meets the specification 52 to be taken into account for rendering the SPTS. For instance, such a combination can be performed according to the embodiment which has been described in connection with Fig. 3.

Whatever the embodiment of the above-described system or device, it should be noted that the interfaces 32, 35 and 37 or some of these interfaces may be combined into a single interface.

Similarly to the above-described system, a method to enhance the main audio-video content 11 using at least one application image 21 will now be described in more detail.

The first step of the method aims to send one request 51 from the requesting unit 50, 50' to the application server 20. This request 51 preferably comprises at least one identifier 53' for identifying one application 27 that can be run on the application server 20. As shown in Fig. 1, the application server 20 is located outside the end-user area 3 and is able to provide at least one application image 21 from each of the applications 27 hosted by the application engine 28. Preferably, the application image 21 should be regarded as at least an image which is right away displayable by any rendering device. As already mentioned, the application image 21 is identical or similar to a video frame or an audio-video frame. Therefore, an application image is not limited to contain video data only, but it may also include audio data or even text data such as subtitles for instance.

Located inside the end-user area 3, the combiner 30 receives the main audio-video content 11 and the application image(s) 21 with implementation data 22, respectively from the content source 10, 10' and from the application server 20. The content source 10 and the application server 20 may be located at two different places or may be located within the same entity. As received by the combiner 30, the main audio-video content 11 and the application image 20 remain distinguishable from each other, even if they are received through a single channel, for instance in a multiplexed form.

Then, the combiner 30 forms a SPTS 31 from the main audio-video content 11 and the application image 21. As both the main audio-video content and the application image are right away displayable images, the combiner does not need to generate displayable content from non-displayable data, but it must be simply able to form a SPTS 31 from these displayable data.

According to the present method, specifications 52 must be taken into account for correctly rendering the SPTS 31, namely to make the SPTS 31 compliant with a particular rendering device 46 and/or with end-user's presentation preferences. For this reason, these specifications are included within the request 51 before its transmission to the application server 20.

Once received by the application server 20, the latter is able to identify the requested application 27 and to provide, therefrom, at least one application image 21 with implementation data 22. These implementation data 22 define how to form the SPTS 31 so as to comply with the specifications 52 included within the request 51 by the requesting unit 50, 50' at the end-user side.

As already mentioned in reference with the above disclosed system, the development of the SPTS 31 by the combiner 30 mainly involves taking into account user preferences, in particular regarding the presentation of the main audio-video stream 11 and the application image(s) 21 on the display screen 60, 60'. To this end and in accordance with the preferred embodiment, the specifications 52 comprise presentation data 54 defining how to present the application image 21 and the audio-video stream 11 on the display screen 60, 60' of the rendering device 46, 45. However, in addition to the presentation data 54 or instead of these presentation data 54, the specifications 52 may also comprise technical data 56. Preferably, these technical data relate to technical data 56' regarding the display screen 60, 60' and/or to technical data 56" regarding a communication link, or a portion of a communication link, connecting the display screen to the content source 10, 10' and/or to the application server 20.

The request 51 can be generated from the combiner 30 or from the end-user device 45 depending on the location of the requesting unit 50, 50'. In the case where the requesting unit 50' is part of the end-user device 45, this request 51 should preferably be transmitted to the combiner 30 through a wireless connection 43. However, the request 51 could be transmitted, by the end-user device 45, to the application server 20 without passing through the combiner 30. In one embodiment, the combiner is located within the end-user device 45, so that the request 51 is transmitted directly from the end-user device 45 to the application server 20. In this case, the combiner 30 is preferably installed as logical element within the end-user device 45.

The end-user device 45 may be also used as rendering device for playing the SPTS 31, for example instead of the rendering device 46 or in addition to this rendering device.

According to another embodiment, the method further comprises a step for including additional data 16, 16' in the request 51, before this request is sent to the application server 20. As already mentioned with reference to the system, these additional data are preferably raw data provided by a local source 15 within the end-user area 3.

In yet another embodiment, the method may further comprise a step for receiving, by the combiner 30, a secondary video or audio-video stream 17 from the local source 15. In this case, the method may further comprise a step for forming the SPTS 31 from the main audio-video stream 11, from the application image 21 and from the secondary video or audio-video stream 17.

According to one embodiment, the main audio-video content 11 and/or the application image 21 are/is received by the combiner 30 in a compressed form and/or in a multiplexed form.

Finally, it should be noted that the above-described method may further include any other embodiment which has been suggested above during the disclosure of the corresponding system or device.

Although an overview of the inventive subject matter has been described with reference to specific example embodiments, various modifications and changes may be made to these embodiments without departing from the broader spirit and scope of embodiments of the present invention. For example, various embodiments or features thereof may be mixed and matched or made optional by a person of ordinary skill in the art. Such embodiments of the inventive subject matter may be referred to herein, individually or collectively, by the term "invention" merely for convenience and without intending to voluntarily limit the scope of this application to any single invention or inventive concept if more than one is, in fact, disclosed.

The embodiments illustrated herein are believed to be described in sufficient detail to enable those skilled in the art to practice the teachings disclosed. Other embodiments may be used and derived therefrom, such that structural and logical substitutions and changes may be made without departing from the scope of this disclosure. The Detailed Description, therefore, is not to be taken in a limiting sense, and the scope of various embodiments is defined only by the appended claims, along with the full range of equivalents to which such claims are entitled.

## Claims

1. System to enhance a main audio-video content (11) using at least one application image (21), comprising:
a content source (10, 10') for providing said main audio-video content (11),
an application server (20), located outside an end-user area (3), suitable for running at least one application (27) and providing said application image (21) therefrom,
a combiner (30), located inside said end-user area (3), for receiving said main audio-video content (11) and said application image (21), and then for forming a single program transport stream (31) therefrom,
a requesting unit (50, 50') for generating and transmitting to said application server (20) a request (51) identifying said application (27),
**characterized in that**
said request (51) further comprises specifications (52) to be taken into account for rendering said single program transport stream (31), and
said application server (20) is configured to provide said application image (21) with implementation data (22) defining how to form said single program transport stream (31) so as to comply with said specifications (52).

2. System of claim 1, wherein said requesting unit (50, 50') is located within the combiner (30) or within an end-user device (45).

3. System of claim 2, wherein said end-user device (45) is further configured for playing the single program transport stream (31).

4. System of claim 2 or 3, wherein said end-user device (45) is connectable to the combiner (30) through a wireless connection (43) for transmitting said request (51) via said combiner (30).

5. System of any of preceding claims 2 to 4, wherein said end-user device (45) is configured as input device in order to include, in said request (51), at least a part of said specifications (52) and/or identification data (53) regarding at least said application (27).

6. System of any of preceding claims, wherein said specifications (52) comprise presentation data (54) defining how to present said application image (21) and said main audio-video stream (11) on a display screen (60, 60') for rendering said single program transport stream (31).

7. System of any of preceding claims, wherein said specifications (52) comprise technical data (56') of said display screen (60, 60') and/or technical data (56") regarding a data link connecting the display screen (60, 60') to the content source (10, 10') and/or to the application server (20).

8. System of any of preceding claims, wherein said request (51) further comprises additional data (16, 16') to be included in said application images (21), said additional data (16, 16') being provided from at least one local source (15) to said requesting unit (50, 50').

9. System of any of preceding claims, wherein said combiner (30) is further configured for receiving a secondary video or audio-video stream (17) from the local source (15) and for including said secondary video or audio-video stream (17) within said single program transport stream (31) in accordance with said implementation data (22).

10. A device (30) located inside an end-user area (3) to enhance a main audio-video content (11) using at least one application image (21), comprising:
at least one interface (32) for receiving said main audio-video content (11) and said application image (21), said application image (21) being received from outside said end-user area (3),
a combining unit (33) for combining said main audio-video content (11) and said application image (21) into a single program transport stream (31),
**characterized in that**
said interface (32) is further configured to receive implementation data (22) defining how to form said single program transport stream (31), so as to comply with specifications (52) to be taken into account for rendering said single program transport stream (31), and
said combining unit (33) is configured to combine said main audio-video content (11) and said application image (21) in accordance with said implementation data (22).

11. The device (30) of claim 10, further comprising a requesting unit (50) for generating and transmitting, outside said end-user area (3), a request (51) comprising said specifications (52) and identifying at least one application (27) from which said application image (21) is issued.

12. The device (30) of claim 10, further comprising a wireless interface (35) for receiving a request (51) comprising said specifications (52) and identifying at least one application (27) from which said application image (21) is issued.

13. The device (30) of any of claims 10 to 12, further comprising an input interface (37) for receiving, from said end-user area (3), a secondary video or audio-video stream (17), and said combining unit (33) being further configured for including said secondary video or audio-video stream (17) within said single program transport stream (31) in accordance with said implementation data (22).

14. Method to enhance a main audio-video content (11) using at least one application image (21), comprising the steps of:
- sending, from a requesting unit (50, 50') to an application server (20) located outside an end-user area (3), a request (51) identifying at least one application (27) running on said application server (20) for providing said application image (21),
- providing to a combiner (30), located inside said end-user area (3), said main audio-video content (11) and said application image (21), from a content source (10, 10') and from said application server (20) respectively,
- forming, by said combiner (30), a single program transport stream (31) from said main audio-video content (11) and said application image (21), **characterized in that** it further comprises the steps of:
- transmitting, within said request (51), specifications (52) to be taken into account for rendering said single program transport stream (31), and
- providing, by the application server (20), said application image (21) with implementation data (22) defining how to form said single program transport stream (31) so as to comply with said specifications (52).

15. Method of claim 14, wherein said request (51) is generated by using an end-user device (45) as input device for providing identification data (53') of said application (27) and/or at least a part of said specifications (52).
